# EUROPEAN PATENT APPLICATION

(11) **EP 4 582 394 A1**
(43) Date of publication of application: **09.07.2025**
(21) Application number: 24382004.0
(22) Date of filing: 04.01.2024
(51) Int. Cl.: C03C 3/087, C03C 8/02, C03C 8/16, C03C 10/06, C03C 12/00, C03C 8/22, C04B 41/86, C04B 41/50

(54) **MATTE COATING FRIT**

(71) Applicant: Sociedad Anónima Minera Catalano-Aragonesa, 50001 Zaragoza (ES)
(72) Inventor: CABALLERO LÓPEZ, MIGUEL ÁNGEL, 50008 Zaragoza (ES); PÉREZ APARICIO, JOAQUÍN JAVIER, 50008 Zaragoza (ES)
(74) Representative: Schäfer, Matthias W.

(57) **Abstract**

Frit for the production of matt ceramic coatings obtained by devitrification within the glazing of crystalline strontium silicate and/or silicoaluminate substances, which are responsible for the matt quality of the ceramic coating.

The invention presented has the main advantage of respecting the colouring of the pigments used, both in the glaze itself and under the coating, eliminating the presence of toxic elements in its formulation, especially Sa, Zn and Pb, which are susceptible to generate toxic compounds by decomposition or attack of the glaze, being therefore a totally innocuous and environmentally friendly material.

## Description

As its title indicates, the present specification relates to a frit for the production of ceramic coatings with a matt appearance obtained by devitrification within the glaze of crystalline strontium silicate and/or silicoaluminate substances, which are responsible for the matt quality of the ceramic coating.

### Field of the invention

The present invention falls within the field of materials for the ceramic industry, in particular matt frits intended for application in the industrial ceramics sector, in order to obtain a protective matt coating which maintains the colouring of the substrates, glazes and inks under the coating, and which is free from barium in order to avoid problems of toxicity.

### Definitions

Crystalline substance. It is a solid characterised in that its atoms, molecules or ions are arranged in an orderly and repetitive pattern from a unit cell or smaller group of atoms or molecules that completely defines the symmetry and structure of the entire crystal lattice. The properties of these solids are determined both by the strength of the atomic bonds and by the crystal structure and symmetry. When a crystalline substance is subjected to an X-ray beam, it behaves like a diffraction grating, since the distances between the atoms are of the order of the wavelength of the X-rays. When a beam is incident at a given angle, a characteristic diagram of the substance is obtained, consisting of a series of interference lines, or peaks.

Glassy substance. In contrast to crystalline substances, glassy substances lack a repetitive lattice arrangement. These substances are obtained by cooling from a molten material, forming a more or less distorted structure, due to the rapid cooling conditions and the presence of lattice modifying elements.

The glassy materials commonly used as coatings for ceramic materials are based on the crystalline structure of quartz, SiO₂, incorporating lattice modifying oxides that inhibit quartz crystallisation. This is the case, for example, with sodium silicate glasses.

Glass-ceramics. These are materials generated by controlled devitrification of crystalline substances from a molten glaze, which is obtained during the heat treatment process of the ceramic material. At the end of this process, a product containing one or more crystalline phases within a residual glassy phase is obtained.

Ceramic glazes. Also called ceramic coatings, they are compositions of inorganic raw materials and frits that are applied by various techniques on ceramic materials and, after being subjected to a thermal firing treatment of the ceramic material, generate a glassy, continuous and non-porous finish.

Frits. They are insoluble glasses prepared from a mixture of raw materials by a melting process at high temperature and subsequent cooling by thermal shock in water immersion (the so-called fritting process), causing the glass to break into grains of size mostly less than 1 cm.

The frits thus produced are used as components of ceramic glazes in addition to other raw materials. The basic reasons for using frits instead of unmelted raw materials are:
- The ability to include raw materials into the composition of the frit that could not be used because they are water-soluble.
- The possibility of using toxic raw materials that are stabilised in the glaze.
- By using frits instead of raw materials, the chemical reaction of ceramic glazes during the firing process is accelerated, so that the duration of the thermal cycles of the ceramic materials for which they are used as coatings can be reduced, with consequent energy savings.

More specifically, frits whose chemical composition contains a sufficiently high proportion of certain chemical elements to produce a devitrification of crystalline substances are called matt frits. Thus, for example, calcium frits are known, which are those whose CaO concentration is sufficiently high for the ceramic glaze formulated from them, and applied on a ceramic material to devitrify wollastonite, CaSiO₃, during the firing process.

Seger Formula. It is a way of expressing the molecular formula of a frit or glaze, which takes into account the function of the oxides used, as they are classified into three groups:
- Acidic or lattice-forming oxides, mainly oxides of valency 4 or 5 elements that form the glassy lattice. The main lattice former of glassy coatings is SiO₂, which is also part of this group: ZrO₂, SnO₂, TiO₂ and P₂O₅.
- Amphoteric oxides or lattice stabilisers, oxides of valency 3 elements, mainly Al₂O₃, Bi₂O₃ and B₂O₃,although some authors place B₂O₃ in the lattice-forming group due to its capacity for bonding and coordination with 3 or 4 oxygen atoms.
- Basic oxides or lattice modifiers, oxides of valency 1 or 2 elements, responsible for the distortion of the lattice, inhibiting the crystallisation of quartz during the cooling process, giving rise to the glassy structure of amorphous character. For this reason, their presence weakens the lattice, increasing the fusibility of the glaze. The most common are: Li₂O, Na₂O, K₂O, MgO, CaO, SrO, BaO, ZnO, CdO and PbO.

The Seger formula is especially useful when formulating frits and glazes because it is calculated in moles and not in weight, making it easier to understand the reaction processes and the relationships between some chemical elements and others, since these always occur at the chemical bond level and, therefore, in molar proportion. The Seger formula is normalised so that the molar sum of the basic oxides equals 1, the remainder being calculated proportionally, as in the example in Table 1.

**Table 1**

| | **Oxide** | **Seger Formula** | | **% molar** | **% m/m** |
|---|---|---|---|---|---|
| Acid | SiO₂ | 3.0 | 3.2 | 65.22 | 56.24 |
| | ZrO₂ | 0.2 | | 4.35 | 7.69 |
| Amphoteric | B₂O₃ | 0.1 | 0.4 | 2.17 | 2.17 |
| | Al₂O₃ | 0.3 | | 6.54 | 9.54 |
| Basic | Na₂O | 0.5 | 1.0 | 10.87 | 9.67 |
| | CaO | 0.5 | | 10.87 | 14.69 |

### State of the art

As mentioned in the definitions, the ceramic glazes traditionally used to obtain matt coatings consisted of mixtures of raw materials that reacted with each other during the firing cycles giving rise to the appearance of the glaze. When the concentration of certain oxides in the molten glaze was sufficiently high, devitrification of crystalline substances occurred. This devitrification was favoured by the fact that the firing cycles were always of long duration, up to 24h and even longer. With the advent of roller kilns, with very short firing cycles of 25 to 60 minutes from cold to cold, the use of ceramic frits in the formulation of matt glazes became essential.

Although strictly speaking these matt glazes should not be considered as glass-ceramic products (due to the fact that the proportion of crystalline phases obtained in general is not a majority), in the field of glassy coatings we usually speak of glass-ceramic glazes when there is a significant presence of crystalline phases embedded within a glassy matrix and these provide fundamental properties to the glassy coating. In terms of the aesthetic effect produced, there are two types of glass-ceramic glazes:
- Opaque, characterised by the presence of a crystalline phase of very small size (close to the wavelength of visible light) and with a high refractive index, which gives them an opaque appearance, as in the case of zircon, tin or anatase glazes.
- Matt, as in the object of the present application, when the crystals formed on the surface of the coating are large enough (always in the micron range) to produce a loss of gloss effect, or dullness, due to the diffuse reflectance of the incident light on the surface of the glaze, which prevents a clear reflection. This matt effect is used in ceramic coatings as both an aesthetic and technical resource. The technical use of this effect is motivated by the physical properties provided by the crystalline substances present: hardness, refractive index (which influences the transparency/opacity of the coating), coefficient of expansion, etc.

Within this group of matt ceramic glazes by devitrification of crystalline substance phases there is a wide range of possibilities depending on the devitrified crystalline substance. In R. Casasola, J. Ma. Rincón, M. Romero. Glass-ceramics glazes for ceramic tiles - a review Journal of Material Science, 47 (2012) 553-582; doi: 10.1007/s10853-011-5981*-and* a true state-of-the-art review of glass-ceramic materials is available. Table 2 shows a summary of those that appear in R. Casasola (omitting only those containing chromophoric elements) and that are susceptible to devitrification in matt ceramic glazes.

**Table 2**

| **Crystalline phase** | **Chemical formula** | **Hardness (Mohs)** | **Refractive index (n)** | **Coefficient of expansion (·10⁷) [°C⁻¹]** |
|---|---|---|---|---|
| Zircon | ZrSiO₄ | 7.5 | 1.92 - 1.97 | 46 |
| Willemite | 2ZnO·SiO₂ | 5.5 | 1.67 - 1.73 | 32 |
| Mullite | 3Al₂O₃·2SiO₂ | 6 - 7 | 1.62 - 1.66 | 53 |
| Akermanite | 2CaO·MgO·2SiO₂ | 5 - 6 | 1.61 | 45 |
| Cordierite | 2MgO·2Al₂O₃·5SiO₂ | 7 | 1.51 - 1.57 | 6 |
| Wollastonite | CaO·SiO₂ | 5 | 1.59 - 1.61 | 94 |
| Spodumene | Li₂O·Al₂O₃·4SiO₂ | 6.5 - 7 | 1.67 - 1.69 | 9 |
| Diopside | CaO·MgO·SiO₂ | 6 | 1.67 - 1.73 | 77, 173, 70 |
| Cristobalite | SiO₂ | 6.5 | 1.47 - 1.48 | 500 |
| Anorthite | CaO·Al₂O₃·2SiO₂ | 6 | 1.57 | 45 |
| Leucite | K₂O·Al₂O₃·4SiO₂ | 5.5 - 6 | 1.50 - 1.51 | 200 |
| Albite | Na₂O·Al₂O₃·6SiO₂ | 6 - 6.5 | 1,527, 1,531, 1,538 | |
| Orthoclase | K₂O·Al₂O₃·6SiO₂ | 6 - 6.5 | 1.52 - 1.54 | |
| Zirconia | ZrO₂ | 6.5 - 8 | 2.16 - 2.27 | |
| Anatase | TiO₂ | 5.5 - 6 | 2.53 - 2.53 | 272 |
| Rutile | TiO₂ | 6 - 6.5 | 2.67 | 291 |
| Spinel | MgO·Al₂O₃ | 8 | 1.73 - 1.76 | 76 |
| Gahnite | ZnO·Al₂O₃ | 8 | 1.74 - 1.86 | 72 |
| Celsian | BaO·Al₂O₃·2SiO₂ | 6 - 6.5 | 1.57 - 1.60 | |

As can be deduced from the table, and reviewing the available literature on glass-ceramic materials as to which crystalline species are susceptible to devitrify from a molten glaze, the absence (as a component of devitrified substances or phases) of three oxides very commonly used in the manufacture of frits and ceramic glazes is particularly noteworthy: B₂O₃, PbO and SrO. This topic will be discussed below, as it is of great relevance to the development of this invention.

In general, the most important properties to consider when selecting a crystalline phase are hardness (which improves abrasion resistance), coefficient of thermal expansion and refractive index (the lower, the closer to the glaze, the greater the transparency). Thus, in the case of anorthite, for example, the Mohs hardness is 6, while the refractive index is 1.57, which makes it very suitable a priori for the formulation of matt coatings moderately resistant to abrasion, but highly transparent, given the low refractive index, similar to that of common glazes. In contrast, gahnite offers a better hardness, 8, but a poorer refractive index, 1.74 - 1.86, which will result in more abrasion resistant, but more opaline coatings.

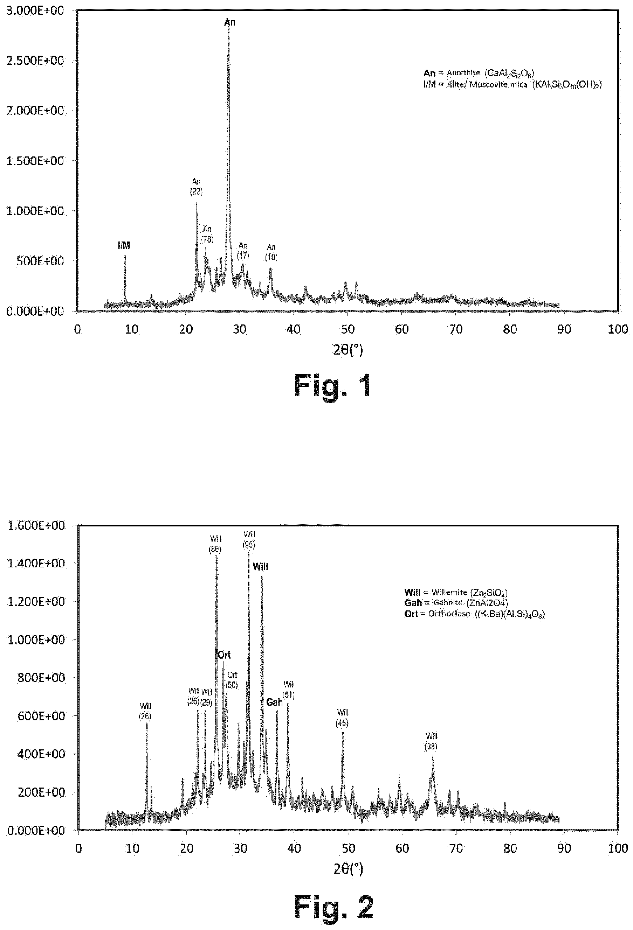

As an example of frits with devitrification of the two crystalline species mentioned, Figures 1 and 2 show the XRD diagrams corresponding, respectively, to a frit rich in CaO and Al₂O₃ that devitrifies anorthite and another rich in ZnO and Al₂O₃ that devitrifies gahnite (together with willemite and orthoclase).

In addition to the aforementioned properties, hardness and refractive index, the contribution to the glaze of the oxides that will form part of the devitrified crystalline species is of vital importance, since there will always be a significant proportion of uncrystallised oxides. Thus in a frit that devitrifies anorthite (CaO·Al₂O₃·2SiO₂) the residual glaze will be very rich in calcium oxide CaO. It is known that the presence of certain oxides in the glaze favours or worsens the colour development of the pigments used.

In this particular case, CaO favours the development of colours such as CaSnSiO₅:Cr₂O₃sphene pink, but worsens the brown or orange pigments of (Zn,Fe)O·(Fe,Cr,Al)₂O₃ spinels. The same is true for zinc frits, which devitrify willemite (2ZnO·SiO₂). In this case, the opposite effect is produced, favouring the development of brown pigment colour, but impairing the development of pink pigments.

It is because of this type of interactions between the oxides present in the glassy phase and those that form part of the pigments that matt barium frits, which devitrify celsian (BaO·Al₂O₃·2SiO₂), are highly regarded, since the presence of BaO in the glaze, unlike MgO, CaO or ZnO, does not produce interactions with the pigments in common use.

Unfortunately, barium frits are under serious scrutiny by the REACH regulation, due to the dissolution of barium salts, and are in the process of being classified as toxic. In this regard, it should be added that the frits that are currently under study due to serious doubts about their toxicity are frits containing high amounts of ZnO or BaO in their composition.

In this perspective, the challenge is to obtain a new type of frits that allows the production of ceramic coatings with good optical properties in terms of shading and respect for the colouring of the pigments used and that does not use toxic substances in its composition that can disintegrate from the glaze by chemical attack, either by the use of cleaning products or by the environment itself (humidity, dew).

As mentioned above, the oxides B₂O₃, SrO and PbO do not appear as part of the state of the art as components of the devitrified crystalline phases of frits and fused enamels, always being relegated to the part of the residual glaze, and used only as fluxes, as they are excellent lattice modifiers. Specifically, for the case of SrO, some known examples of the state of the art regarding its use as a glass stabiliser and not as a crystalline phase are:
- US3849142 wherein the presence of SrO in the glaze is motivated exclusively by its ability to improve the melting of the glaze allowing, together with the addition of other powerful fluxes such as Bi₂O₃, BaO and CdO, the obtaining of a glaze capable of melting at a temperature as low as 760°C. This frit is subsequently used to obtain metallics where the crystalline phase is a noble metal.
- US5116789 wherein the presence of SrO in molar proportions of between 15 and 26% is used precisely for the purpose of preventing devitrification of crystals within Corning-type glasses wherein resistance to devitrification must be one of their main qualities.

In addition to these, there are countless patents wherein SrO appears as part of the chemical composition of a frit, but always used as a lattice-modifying flux. Some examples of these frits are:
- EP1006088 wherein SrO appears as a minority component of a bismuth frit flux up to 10% by weight.
- WO2020/053825, glassy, amorphous frit, for replacement of quartz in fillers for various uses where SrO is additionally present, as a flux.

Even in the cases of frits or glazes wherein a clear devitrification occurs, this consists of crystalline structures free from SrO, this being relegated to the glassy phase, as a flux or stabiliser thereof:
- CN111533455 is intended to provide a polished tile glaze, wear resistant and antifouling, formed by the combination of two frits: frit 1, which devitrifies cordierite, 2MgO·2Al₂O₃·5SiO₂, and frit 2, of glassy and fluxing character with SrO as flux, among other elements, which allows regulating the precipitation of cordierite crystals.
- ES2296509 wherein SrO appears as a flux up to 2% by weight, but where the frit devitrifies mixed crystals of CaO,TiO₂ and SiO₂.
- CN114656151 claims a polishing glaze comprising raw material, alumina, transparent wear resistant frit and crystallised Ca-Mg frit. After melting, alumina can react with silicon, magnesium and calcium oxides to give rise to cordierite, anorthite and mullite phases. The addition of zinc oxide, potassium feldspar and strontium carbonate is as fluxes, with the objective of reducing the viscosity of the frit in the melt.

On the other hand, one can also find countless formulations of glazes with strontium, but without being part of a frit, in most of the minority cases and, therefore, without referring to a frit wherefrom a strontium silicoaluminate devitrification can occur. In all these cases SrO acts in its well-known role as a glaze modifier, with the sole purpose of providing flux and gloss. This is widely reflected, for example, in:
- ES2233205 relates to an anti-slip material containing a series of refractory materials wherein strontium hydroxide appears as a component, but this is included as a raw material in the final composition, not as part of a frit.
- DE4345516 claims a thin-layer ceramic substrate with a strontium oxide content of up to 30%, but expressly states that it is an amorphous glaze and therefore without devitrification of crystalline substances.

Finally, it is known that crystalline substances containing strontium can be obtained, but these are manufactured by non-frit synthesis mechanisms, i.e. by chemical reactions in the solid state, either with or without the addition of mineralisers (fluxes introduced with the aim of reducing the synthesis temperature). This can be seen in the following documents:
- In ES2186499A1 strontium appears at 8% by weight of a frit used as a mineraliser in a synthesis of a phosphorescent pigment of composition M_{(1-y-z)}Eu_{y}R_{z}Al₂₋ₓBₓO₄, where M can be Mg, Ca, Sr and Ba. However, in this case, what is obtained is not a molten and subsequently cooled frit, but a phosphorescent pigment wherein the frit is used only as a flux by way of a mineraliser, replacing or adding other mineralisers typically used in the crystalline phase of the phosphorescent pigment. The strontium-containing crystalline substance is, therefore, not obtained as part of a devitrification process from a molten material.
- WO2022/190062 indicates that strontium can be used as a component of a crystalline material of spinel-like structure AB₂O₄, but it is a process of synthesis of pure crystalline substance in the solid state.

### Description of the invention

In order to solve the problem currently existing in matt frits, to improve the current state of the art in the absence of frits designed for the formulation of matt glazes which meet the criteria of: optimum crystallinity, neutral colouring capacity, chemical resistance and absence of toxicity, the present invention relates to a matt frit, free from barium, determined fundamentally because it comprises a chemical composition in oxides such that it favours the devitrification of crystalline substances of silicates and/or silicoaluminates of strontium, and comprising, according to Seger formula expressed in moles:
between 1.8 and 4.2 moles of SiO₂,
between 0.3 and 0.8 moles of Al₂O₃,
between 0.4 and 0.9 moles of SrO,
equal to or less than 0.3 moles of basic oxides of type R₂O, where R is chosen from the group formed by Li, Na and K,
equal to or less than 0.3 moles of basic oxides of type R'O, where R' is chosen from the group formed by Mg, Ca and Zn.
equal to or less than 0.2 moles of B₂O₃,
with the sum in moles of the basic oxides R₂O, R'O and SrO equal to unity, thus obtaining a transparent matt frit.

In a preferred embodiment, the transparent matt frit comprises a chemical composition, according to Seger formula expressed in moles:
between 2.20 and 4.15 moles of SiO₂,
between 0.45 and 0.70 moles of Al₂O₃,
between 0.45 and 0.80 moles of SrO,
equal to or less than 0.25 moles of basic oxides of type R₂O, where R is chosen from the group formed by Li, Na and K,
equal to or less than 0.25 moles of basic oxides of type R'O, where R' is chosen from the group formed by Mg, Ca and Zn.
equal to or less than 0.15 moles of B₂O₃,
with the sum in moles of the basic oxides R₂O, R'O and SrO equal to unity, thus obtaining a transparent matt frit.

### Advantages of the invention

The incorporation of this new strontium frit with devitrification of strontium silicates and/or silicoaluminates for the formulation of glazes allows producing matt coatings of ceramic materials while respecting the colouring of the pigments used thanks to its transparency, both in the glaze itself and under the coating.

An additional advantage of the invention is its high chemical resistance to both acidic and basic cleaning agents, as well as to the effects of weathering. Furthermore, compared to other state-of-the-art materials, the absence of toxic elements in its formulation, especially Ba and Pb, susceptible of generating toxic compounds by decomposition or attack of the glaze, make it a totally innocuous and environmentally friendly material.

It should also be noted that, in contrast to the matt frits of Mg, Ca and Zn usually used, a high concentration of SrO does not cause any distortion in the colourings of the pigments, since it does not cause their dissolution.

### Description of the figures

Figure 1 shows the X-Ray Diffraction (XRD) diagram corresponding to a CaO and Al₂O₃ frit devitrifying anorthite, CaO·Al₂O₃·2SiO₂, showing the number of counts, on the Y-axis, for each of the identified phases.
Figure 2 shows the XRD diagram corresponding to a ZnO- and Al₂O₃-rich frit wherein co-devitrification of the crystalline species willemite ZnO·SiO₂, gahnite ZnO·Al₂O₃ and orthoclase ((K,Ba)(Al, Si)₄O₈ occurs, showing the number of counts, on the Y-axis, for each of the identified phases.
Figure 3 shows the flow diagram of the frit manufacturing procedure, where stage 1 corresponds to dosing, stage 2 corresponds to mixing, stage 3 to melting, stage 4 to fritting, and stage 5 to draining.
Figure 4 shows the comparative fusibility curves of the frits in Example 1: Sr Frit 1, Sr Frit 2 and Sr Frit 3.
Figure 5 shows the X-Ray Diffraction (XRD) diagram corresponding to the Sr Frit 1 frit of example 1, after undergoing a firing cycle at 1160°C, demonstrating the presence of devitrified strontium silicates and silicoaluminates.

### Preferred embodiment of the invention

The present invention relates to a barium-free frit for producing ceramic coatings of matt appearance obtained by devitrification within the glaze of crystalline substances of strontium silicates and silicoaluminates, which is responsible for the matt quality of the ceramic coating.

Strontium oxide (SrO) is commonly used in the formulation of frits and glossy glazes free from crystallisation, providing an improvement in gloss and transparency. However, when used in high concentrations, together with moderate or high amounts of aluminium oxide (Al₂O₃), it leads, surprisingly, to the devitrification of crystalline substances of strontium silicates or silicoaluminates, with one or the other prevailing (or even coexisting) depending on the proportion of Al₂O₃ used.

For this purpose, the matte coating frit comprises, according to Seger formula expressed in moles:
between 1.8 and 4.2 moles of SiO₂,
between 0.3 and 0.8 moles of Al₂O₃,
between 0.4 and 0.9 moles of SrO,
equal to or less than 0.3 moles of basic oxides of type R₂O, where R is chosen from the group formed by Li, Na and K,
equal to or less than 0.3 moles of basic oxides of type R'O, where R' is chosen from the group formed by Mg, Ca and Zn.
equal to or less than 0.2 moles of B₂O₃,
with the sum in moles of the basic oxides R₂O, R'O and SrO equal to unity, thus obtaining, in a preferred embodiment, a transparent matt frit.

In a preferred embodiment, the barium-free transparent matt frit comprises a chemical composition, according to Seger formula expressed in moles:
between 2.20 and 4.15 moles of SiO₂,
between 0.45 and 0.70 moles of Al₂O₃,
between 0.45 and 0.80 moles of SrO,
equal to or less than 0.25 moles of basic oxides of type R₂O, where R is chosen from the group formed by Li, Na and K,
equal to or less than 0.25 moles of basic oxides of type R'O, where R' is chosen from the group formed by Mg, Ca and Zn.
equal to or less than 0.15 moles of B₂O₃,
with the sum in moles of the basic oxides R₂O, R'O and SrO equal to unity, thus obtaining a transparent matt frit.

This range of formulas in moles is theoretical, since the final formula may contain up to 1% by weight (and not in moles, because it is defined by the final chemical analysis) of other oxides as impurities, depending on the available industrial raw materials. These oxides as impurities can be, without excluding others, included in the group formed by Fe₂O₃, Cr₂O₃, MnO, P₂O₅, BaO, SO₃, or any combination of the above.

Once the theoretical molar composition has been defined, the raw materials that provide these oxides are selected and adjusted to the theoretical composition formulated, so that the difference between the two is minimised. As indicated above, depending on the raw materials selected, there will be a provision of undesirable oxides such as impurities of Fe₂O₃, Cr₂O₃, etc.

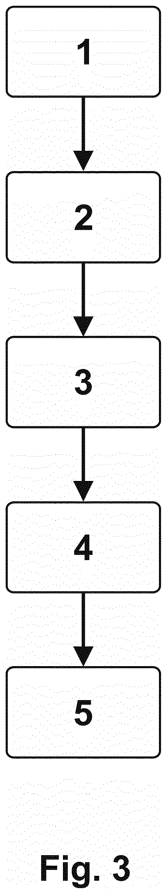

For the industrial manufacture of the frit, the typical frit production process is used, as illustrated in Figure 3, consisting of: A dosing stage (1), successively weighing the raw materials that make up the formula, to produce batches of 500 to 2000 kg, typically. The obtained composition passes to a mixing stage (2) after which it passes to a melting stage (3) performed in a continuous melting furnace, where the mixture is subjected to a temperature of between 1400 and 1600°C, depending on the fusibility of the formulation. The glassy material obtained passes to a fritting stage (4) wherein it is continuously poured over a basin with water so that the sudden cooling of the glass occurs, breaking it into small pieces of a maximum size usually less than 1 cm in greatest diameter. Finally, the frit is extracted from the water basin by means of the vibrating system incorporated in the basin and the draining stage (5) is carried out.

The frits, object of the invention are used for the formulation of ceramic coatings, one of the possibilities of use, non-limiting, being the composition with other frits and various raw materials, including kaolin or clay as suspension agents, and rheological additives to subsequently grind it in aqueous suspension, giving rise to a glaze in liquid. This liquid glaze is applied on the ceramic substrates, by any of the usual techniques, by curtain, airbrushing, etc. Finally, the whole is fired, usually at temperatures between 1000 and 1300°C, to produce the ceramic material with the ceramic coating.

The ceramic coating obtained, with devitrification of strontium silicates and/or silicoaluminates, has a high degree of crystallinity, so it has an optimum level of matting, is very stable against the attack of acids and bases, and all types of cleaning agents. Moreover, the absence of chemical elements such as Ba, Zn, Pb, which can generate toxic compounds by decomposition or attack of the glaze, provides a harmless and environmentally friendly ceramic coating.

Finally, and in contrast to the matt frits of Mg, Ca and Zn, a high concentration of SrO does not cause any distortion in the colourings of the pigments, as it does not cause their dissolution.

As a reflection of the intense experimental activity, fruit of the inventive activity that has given rise to the invention, the performance and results of some examples of tests carried out to verify the results are detailed below.

### Example 1 Formulation, fritting and characterisation of three transparent matt strontium frits.

According to the frit manufacturing procedure previously described, and schematised in Figure 3, three raw material compositions were weighed, in a dosing stage (1), such that they gave rise to the proportions in oxides, according to the Seger formulas expressed in moles in Table 3 and homogenised in a laboratory mixer, in a mixing stage (2).

**Table 3. Seger formulas (no. moles) for Sr frits**

| **Oxide** | **Sr Frit 1** | **Sr Frit 2** | **Sr Frit 3** |
|---|---|---|---|
| SiO₂ | 2.38 | 2.43 | 2.33 |
| Al₂O₃ | 0.41 | 0.38 | 0.44 |
| SrO | 0.53 | 0.53 | 0.53 |
| *Na₂O* | 0.06 | 0.06 | 0.06 |
| *K₂O* | 0.19 | 0.19 | 0.19 |
| CaO | 0.21 | 0.21 | 0.21 |

400 g of each of these mixtures were melted in a laboratory crucible, a process equivalent to that of production in a continuous melting furnace (3), at a temperature of 1550°C with a maximum temperature residence time of 30 minutes. After melting, they were cooled by thermal shock by pouring them into a water tank (4), in a fritting stage (4), obtaining, once drained (5), frits with a perfectly glassy and homogeneous appearance.

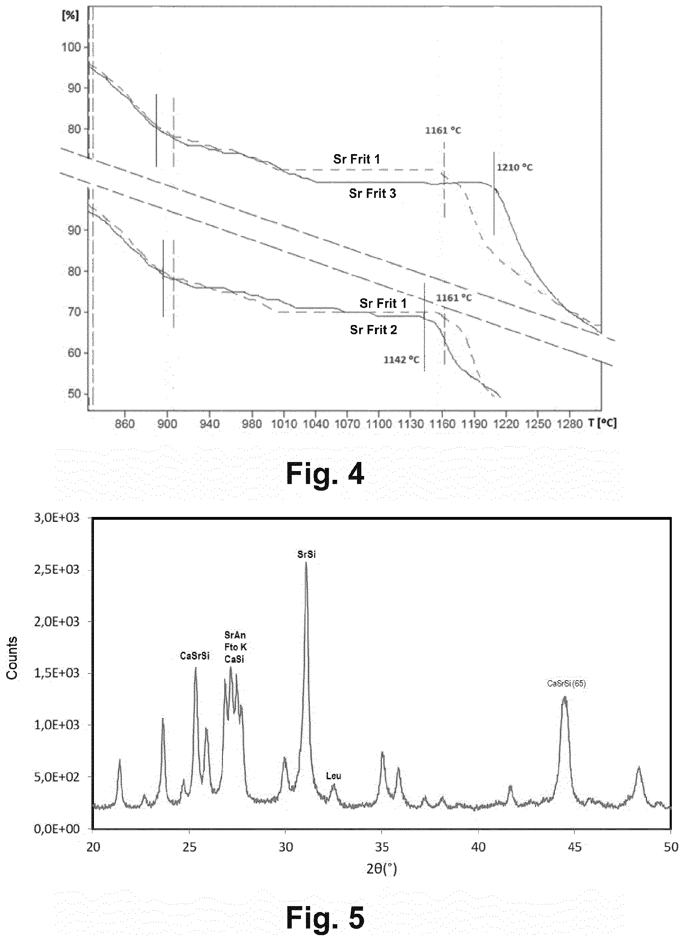

The frits obtained were characterised using a heating microscope and the fusibility curves shown in Figure 4 were obtained. As can be seen, in each of the curves there is a flat area wherein there is no increase in shrinkage, which is indicative of the presence of a devitrified crystalline substance. Table 4 compares the molar amounts of Al₂O₃ versus maximum temperature of the crystallisation zones of the 3 frits, in increasing order.

**Table 4**

| **Oxide** | **Sr Frit 2** | **Sr Frit 1** | **Sr Frit 3** |
|---|---|---|---|
| Al₂O₃ (moles) | 0.38 | 0.41 | 0.44 |
| Max T [°C] | 1142 | 1161 | 1210 |

As can be seen, there is a direct relationship between the Al₂O₃ content and the maximum crystallisation temperature. In other words, by varying the proportion of Al₂O₃ present in the formula, the stability zone of the frits can be regulated and, therefore, their optimum working range, thus making it possible to formulate frits suitable for use from porous single-firing cladding at 1120°C to porcelain stoneware at 1250°C.

Moreover, in order to determine which crystalline species devitrify during heat treatment, frit 1 was tested according to the following analytical procedure:
I) Sample preparation.
   a. Obtaining a suspension of frit 1, by aqueous milling at a solids content of 70% by weight, in a fast laboratory mill with alumina balls as grinding material, using 0.3% deflocculant. The grinding time was the time necessary to obtain a residue on a 40 µm sieve between 1 and 2 %.
   b. Manufacture of a cylindrical specimen by casting the suspension obtained, using a metal mould placed on a porous substrate.
   c. Extraction of the obtained specimen and drying in an oven at 110°C for 2 hours.
   d. Firing in a laboratory electric furnace, with the thermal cycle being:
      (1) Rapid increase to 500°C.
      (2) Heating at a rate of 25°C/min from 500°C to the maximum temperature of 1160°C.
      (3) Remaining at maximum temperature for 6 minutes.
      (4) Rapid cooling from maximum temperature to ambient temperature.
II) Identification of crystalline structures.
   The specimen obtained according to the preparation procedure (I) was tested by X-Ray Diffraction. The technique consists of incident on an X-ray beam of known wavelength on the sample. The X-ray beam is diffracted and reflected at angles characteristic of the crystal planes, obtaining the corresponding diffractogram, from which the crystalline species present are identified.

Figure 5 shows the diffractogram obtained for frit 1 wherein the peaks of maximum intensity of the phases identified with strontium can be seen:
- **SrSi** = strontium silicate (Sr₂SiO₄), monoclinic phase
- **SrAn** = Slawsonite (SrAl₂Si₂O₈)
- **CaSrSi** = Mixed calcium strontium silicate (Sr₂₋ₓCaₓSiO₄)

In addition to other minority crystalline species:
- **Leu** = Leucite (KAlSi₂O₆)
- **FtoK** = potassium feldspar (KAlSi₃O₈)
- **CaSi** = Calcium silicate (Ca₂SiO₄)

In this example, the combined presence of strontium silicate (Sr₂SiO₄) and slawsonite (SrAl₂Si₂O₈) is explained by the molar ratio of Al₂O₃/SrO= 0.41/0.53, with an excess of SrO over Al₂O₃(hence the importance of formulating in moles). Thus, the lower the Al₂O₃/CaO ratio, the higher the proportion of strontium silicate, and conversely, the higher the Al₂O₃/SrO ratio, the higher the proportion of slawsonite.

On the other hand, the inclusion in the molar formula of frit 1 of 0.21 moles of CaO explains the devitrification of the mixed calcium-strontium silicate, by partial substitution of Sr atoms by CaO in the crystal structure of the silicate.

### Example 2 Formulation, glazing, firing and characterisation of a matt glaze with strontium frit.

As a sample of the use of the frit of Example 1, a glaze composition was prepared according to the formula in Table 5, expressed in % by weight.

**Table 5**

| **Component** | **%m/m** |
|---|---|
| Sr Frit 1 | 70.0 |
| Sodium nepheline | 20.0 |
| Kaolin | 9.6 |
| Carboxymethyl cellulose | 0.2 |
| Sodium tripolyphosphate | 0.2 |

This composition was ground with 36% water added in a ball mill to a particle size characterised by a residue of 4% on a 45 µm sieve.

The liquid glaze obtained was applied on a white body stoneware substrate, with a gauge thickness of 0.4 mm, and fired in a 45-minute cold-to-cold cycle with a maximum temperature of 1170°C.

The result was a ceramic tile with a matt surface appearance. The gloss of the surface was measured, giving the values in Table 6.

**Table 6**

| **Angle** | **Gloss (UG)** |
|---|---|
| 20° | 1.1 |
| 60° | 2.9 |
| 85° | 2.7 |

These low values are the result of high diffraction of incident light, which is indicative of a high concentration of crystals on the surface.

Persons skilled in the art will easily understand that the characteristics of different embodiments can be combined with characteristics of other possible embodiments whenever such a combination is technically possible.

All the information referring to examples or modes of embodiment, form part of the description of the invention.

## Claims

1. - Matte coating frit, suitable for protecting and maintaining the colouring of substrates, glazes and inks in industrial ceramics, **characterised in that** its chemical composition comprises, according to Seger formula expressed in moles,
between 1.8 and 4.2 moles of SiO₂,
between 0.3 and 0.8 moles of Al₂O₃,
between 0.4 and 0.9 moles of SrO,
equal to or less than 0.3 moles of basic oxides of type R₂O, where R is chosen from the group formed by Li, Na and K,
equal to or less than 0.3 moles of basic oxides of type R'O, where R' is being chosen from the group formed by Mg, Ca and Zn.
equal to or less than 0.2 moles of B₂O₃,
with the sum in moles of the basic oxides R₂O, R'O and SrO equal to unity.

2. - Matte coating frit, according to the previous claim, **characterised in that** its chemical composition comprises, according to Seger formula expressed in moles:
between 2.20 and 4.15 moles of SiO₂,
between 0.45 and 0.70 moles of Al₂O₃,
between 0.45 and 0.80 moles of SrO,
equal to or less than 0.25 moles of basic oxides of type R₂O,
equal to or less than 0.25 moles of basic oxides of type R'O,
equal to or less than 0.15 moles of B₂O₃,
with the sum in moles of the basic oxides R₂O, R'O and SrO equal to unity,

3. - Matte coating frit, according to any of the previous claims, **characterised in that it** contains up to 1% by weight of other oxides as impurities, depending on the commercial raw materials available.

4. - Matte coating frit, according to claim 3, **characterised in that** the other oxides as impurities are comprised in the group formed by ₂O₃, Cr₂O₃, MnO, P₂O₅, BaO, SO₃, or any combination of the above.

5. - Use of a matte coating frit, according to any of the preceding claims, for the production of ceramic coatings with a matt appearance.

6. - Use of a matte coating frit, according to claim 5, in composition with other frits and various raw materials, to give rise to a glaze in liquid by grinding in aqueous suspension.

7. - Use of a matte coating frit according to claim 6, wherein the raw materials include suspension agents and rheological additives.

8. - Use of a matte coating frit according to claim 7, wherein the suspension raw materials are chosen from the group formed by kaolin or clay.
